# EUROPÄISCHE PATENTSCHRIFT

(11) **EP 0 897 789 B1**
(45) Veröffentlichungstag und Bekanntmachung des Hinweises auf die Patenterteilung: **02.01.2002**
(21) Anmeldenummer: 98113030.5
(22) Anmeldetag: 14.07.1998
(51) Int. Cl.: B29C 47/34

(54) **Vorrichtung zum Extrudieren von Kunststoffhohlprofilen für Fenster- oder Türprofile**
Apparatus for extruding plastic window or door profiles
Appareil pour l'extrusion de profilés en matière plastique pour fenêtres ou portes

(30) Priorität: 20.08.1997 DE 29714899 U
(43) Veröffentlichungstag der Anmeldung: 24.02.1999
(73) Patentinhaber: Veka AG, 48324 Sendenhorst (DE)
(72) Erfinder: Scharmann, Karl-Heinz c/o Veka AG, 48324 Sendenhorst (DE)
(74) Vertreter: Strauss, Hans-Jochen, Dipl.-Phys., Dr.

(56) Entgegenhaltungen:
- WO-A-96/29186
- WO-A-98/34774
- CH-A- 432 968
- DE-A- 3 305 175

## Beschreibung

Die Erfindung betrifft eine Vorrichtung zum Extrudieren von Kunststoffhohlprofilen für Fenster- oder Türprofile, die in serieller Anordnung aus einem Extruder, einer Kalibrierung, einer Kühlung, sowie aus einem Raupenzug zum Ziehen des erkaltenden Profils besteht, und wobei der Raupenzug aus übereinanderliegenden Endlos-Stollenketten gebildet ist, zwischen denen das Profil klemmend und ziehend förderbar ist.

Bei der Herstellung von Kunststoffhohlprofilen, die im wesentlichen für den Bau von Fenstern oder Türen bestimmt sind, wird zunächst in der seriellen Anordung PVC-Granulat in einem Extruder erwärmt, so daß eine plastische Masse gebildet wird. Diese plastische Masse wird dann mittels eines Schneckentriebs aus dem Extruder durch ein Werkzeug gedrückt, welches direkt hinter dem Extruder angeordnet ist.

In dem Bereich der nachgeschalteten Kalibrierung wird das Kunststoffhohlprofil entsprechend geformt, wobei es dann mittels einer nachgeschalteten Kühlung auf Umgebungstemperatur gekühlt wird. In der Kühlphase erhärtet sich das Kunststoffprofil derart, daß es mittels eines nachgeschalteten Raupenzuges gezogen werden kann. Dieser Raupenzug besteht dabei im wesentlichen aus zwei übereinanderliegenden Endlos-Stollenketten, wobei zwischen diesen Stollenketten das erstarrte Profil klemmend gezogen wird. Somit wird erreicht, daß am Anfang der Extrusionsstrasse der Extruder seinerseits die plastische Masse drückt, wobei endseitig der Extruderstrasse der Raupenzug das erstarrte Profilmaterial zieht und fördert.

Die Geschwindigkeit mit der das geformte Profil auf einer derartigen Extrusionsstrasse gezogen wird, ist davon abhängig, inwieweit bei einem derartigen Kunststoffhohlprofil, das aus mehreren Kammern besteht, die in den Kammern noch vorhandene Wärme bereits abgebaut ist. Ein wesentlicher Punkt hierbei ist, dass die in den Kammern während des Ziehens noch vorhandene Restwärme entweichen muss, da diese zu Verformungen der Profilwände führen kann. Somit ist eine Obergrenze der Ziehgeschwindigkeit des Raupenzuges gegeben, da insbesondere bei einem zu schnellem Ziehen diese Restwärme verbleibt und somit die Stollenabdrücke auf dem Kunststoffhohlprofil sichtbar werden, also Verformungen an dem Profil unvermeidbar sind.

Es ist daher die Aufgabe der Erfindung, hier insbesondere eine Vorrichtung zum Extrudieren von Kunststoffhohlprofilen derart weiterzubilden, mit der die Ziehgeschwindigkeit des Raupenzuges verbessert werden kann.

Diese Aufgabe wird erfindungsgemäss dadurch gelöst, dass die in der Stollenkette quer zur Förderrichtung angeordneten Einzelstollen nur mit einem Teilbereich ihrer Klemmfläche an dem Profil anliegen. Dies führt in vorteilhafter Weise dazu, dass die Ziehgeschwindigkeit, die für die Extrusionsgeschwindigkeit des Kunststoffhohlprofils eine entscheidende Rolle spielt, wesentlich gesteigert werden kann. Denn aufgrund der Ausbildung, dass die Einzelstollen nur noch mit einem Teilbereich klemmend an dem erstarrten Kunststoffhohlprofil anliegen, kommt es bei den anliegenden Stollen zu keinem Wärmestau, der dazu führt, dass sich insbesondere die Wände des Kunststoffhohlprofils verformen. Dabei reicht einerseits die Klemmung hinreichend aus, um insbesondere die nötigen Ziehkräfte aufzubringen, wobei andererseits auch erreicht wird, dass trotz der geringeren Klemmflächen auch für den Abbau der Restwärme ein hinreichender Raum geschaffen wird.

In Weiterbildung der Erfindung ist die Klemmfläche des Stollens im wesentlichen in dem Bereich des gezogenen Profils ausgespart, wo die Hohlkammer des Profils liegt. Gerade in diesem Bereich staut sich die Innenwärme, die dazu führt, dass bei direkt anliegender Klemmfläche diese nicht abgeführt wird. Es ist daher besonders vorteilhaft, dass insbesondere in diesem Bereich die Klemmfläche ausgespart ist, so dass eine Auskühlung nach aussen hin erfolgen kann, wobei auf jeden Fall vermieden wird. daß in diesem Bereich ein Wärmestau hervorgerufen wird.

Hierzu weist die Klemmfläche im wesentlichen eine rechteckige Aussparung auf. In Weiterbildung der Erfindung, da es sich hier bei der Raupenzugsvorrichtung um eine Doppel-Stollenkette handelt, ist es besonders vorteilhaft, dass die Aussparung der Klemmflächen von den übereinanderliegenden Einzel-Stollen gegenüberliegend angeordnet sind. Somit kann die Wärme sowohl nach oben als auch nach unten entweichen, ohne dass es hier an der Profilfläche, insbesondere an der oberen und der unteren Seitenwandung des Profils, zu Verformungen kommen kann.

Nach einer besonders vorteilhaften Weiterbildung der Erfindung sind die jeweils übereinanderliegend angeordneten Einzel-Stollen der Profilform angepasst. Hierzu weisen die sich gegenüberliegenden Einzel-Stollen eine L-Form auf, wobei in den langen Schenkelbereichen jeweils die Aussparungen angeordnet sind, die sich jeweils oberhalb und unterhalb auf den Bereich der Hauptkammer des Profils legen, und wobei sich die Stirnseiten der kurzen Schenkel auf die Blendrahmenbereiche des Profils legen und diese jeweils gegen die langen Schenkel pressen. Aufgrund dieser geformten Stollen wird eine hinreichende Klemmwirkung der Anpressflächen erreicht.

Ein Ausführungsbeispiel der Erfindung wird anhand der nachstehenden Figuren 1 bis 4 näher erläutert, dabei zeigen:
- Figur 1:: Eine teilweise geschnittene Extrusionslinie in der Seitenansicht;
- Figur 2:: Einen Schnitt gemäß der Schnittlinie II-II in Figur 1:
- Figur 3:: Eine weitere Ausführungsform gemäß der Figur 2:
- Figur 4:: Eine weitere Ausführungsform gemäß der Figur 3.

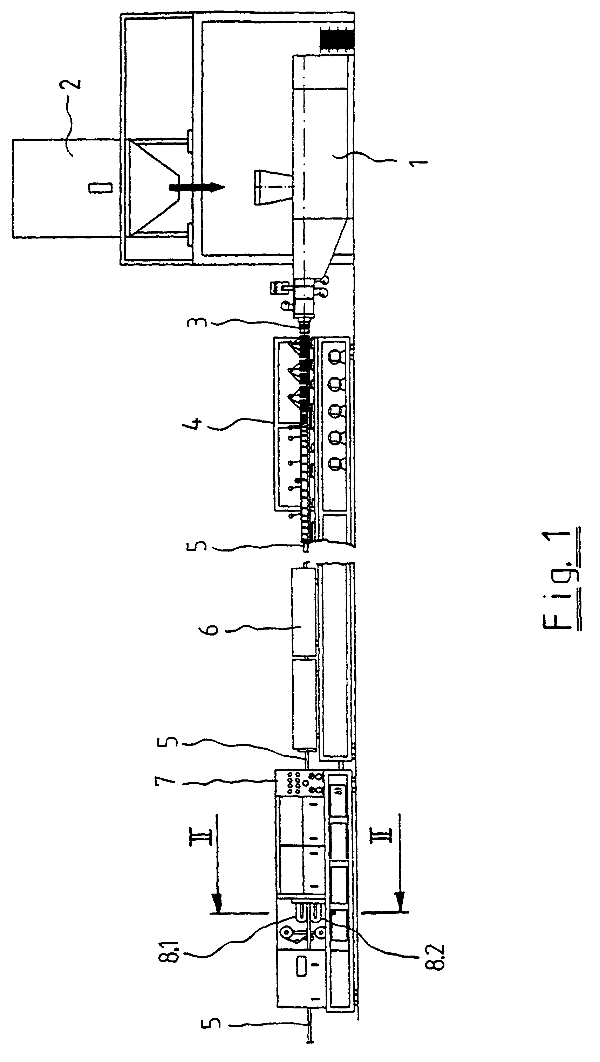

Die Figur 1 zeigt in der Seitenansicht eine Vorrichtung zum Extrudieren von Kunststoffhohlprofilen, mit der insbesondere Profile für Fenster oder Türen hergestellt werden. In der Extrusionslinie ist in serieller Anordnung zunächst ein Extruder 1 angeordnet, über den ein Silo 2 aufgestellt ist. In dem Silo 2 befindet sich das PVC-Pulver oder Granulat, welches dem Extruder 1 zugeführt wird. In dem Extruder 1 wird dieses Material erwärmt und mittels nicht näher dargestellter Schnecken durch ein Werkzeug 3, welches hinter dem Extruder 1 angeordnet ist, zu einem Hohlprofil 5 extrudiert.

An dem Extruder 1 schliesst sich eine Kalibrierung 4 an, in dem das Profil 5 entsprechend geformt wird. Tritt das Profil 5 aus der Kalibrierung heraus, wird es auf Umgebungstemperatur in einer Kühlung 6 heruntergekühlt, so dass es vom plastischen zum festen Zustand übergeht. Der Kühlung 6 nachgeschaltet ist ein Raupenzug 7, der im wesentlichen aus zwei übereinanderliegenden Endlos-Stollenketten 8.1 und 8.2 besteht. Zwischen den beiden Stollenketten 8.1 und 8.2 wird das Profil 5 klemmend eingespannt und aufgrund der Klemmung bzw. Pressung Ziehkräfte eingeleitet, die das Profil 5 aus der Kühlung 6 herausziehen und weiterfördern.

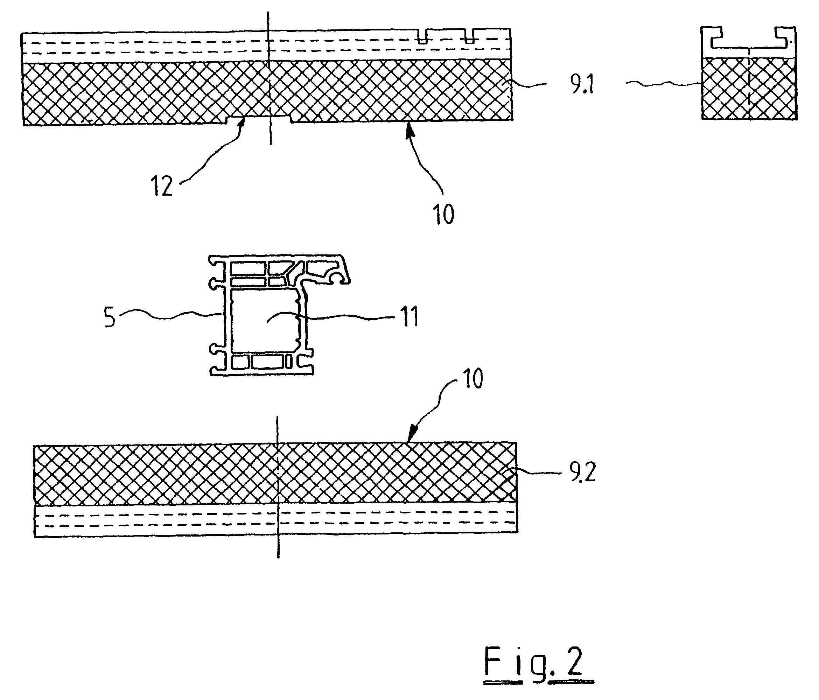

Erfindungsgemäss liegen dabei, wie in der explosionsartigen Darstellung der Figur 2 zu erkennen ist, die in der Stollenkette 8.1 und 8.2 quer zur Förderrichtung angeordneten Einzel-Stollen 9.1 und 9.2 nur mit einem Teilbereich ihrer Klemmfläche 10 an dem Profil 5 an. Wie insbesondere aus der Figur 2 zu erkennen ist, ist die Klemmfläche 10 des Stollens 9.1 im wesentlichen in dem Bereich des gezogenen Profils 5 ausgespart, wo die Hohlkammer 11 des Profils 5 liegt. Dabei weist die Klemmfläche 10 im wesentlichen eine rechteckige Aussparung 12 auf.

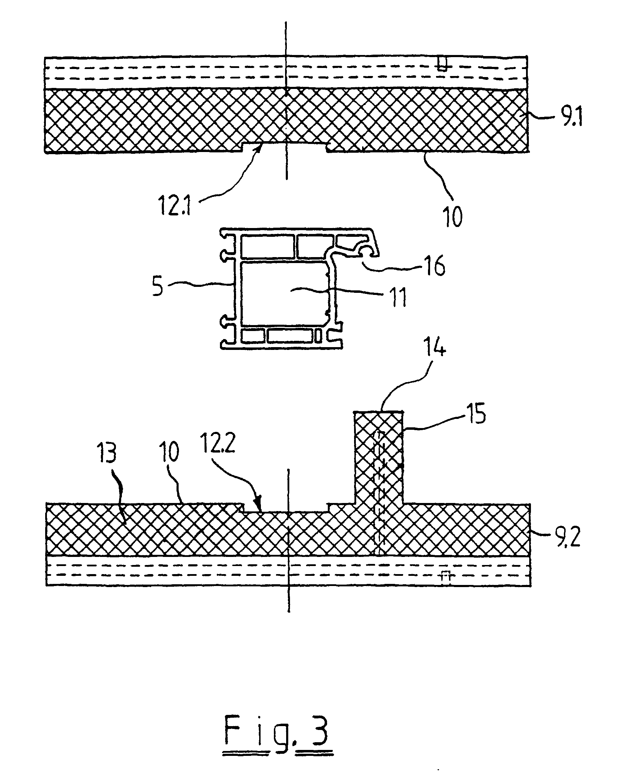

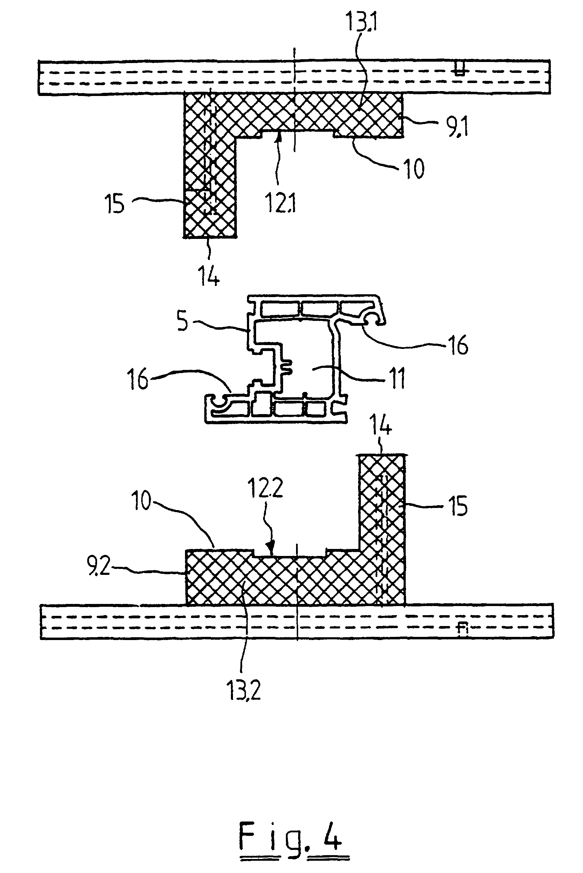

Entsprechend einer Weiterbildung insbesondere der Einzel-Stollen 9.1 und 9.2 sind die Aussparungen 12.1 und 12.2 der Klemmflächen 10 von den übereinanderliegenden Einzel-Stollen 9.1 und 9.2 gegenüberliegend angeordnet. Hierbei können gemäss der Weiterbildung, entsprechend der Figur 3 und 4, die jeweils übereinanderliegend angeordneten Einzel-Stollen 9.1 und 9.2 der jeweiligen Profilform 5 angepasst sein. Hierbei sind diese, wie in der Figur 3 und 4 ersichtlich, derart ausgebildet. dass die sich gegenüberliegenden Einzelstollen 9.1 und 9.2 eine L-Form aufweisen, wobei in den langen Schenkelbereichen 13.1 und 13.2 jeweils die Aussparungen 12.1 und 12.2 angeordnet sind, die sich jeweils oberhalb und unterhalb auf den Bereich der Hauptkammer 11 des Profils 5 legen, und wobei sich die Stirnseiten 14 der kurzen Schenkel 15 auf die Blendrahmenbereiche 16 des Hohlprofils 5 legen und diese jeweils gegen die langen Schenkel 13 pressen. Es versteht sich von selbst, dass, wenn diese beiden Einzel-Stollen 9.1 und 9.2 sich pressend an das Hohlprofil legen, diese eine hinreichende Presskraft aufbringen, um somit einen sicheren Zug zu gewährleisten.

## Patentansprüche

1. Vorrichtung zum Extrudieren von Kunststoffhohlprofilen für Fenster- oder Türprofile, die in serieller Anordnung aus einem Extruder, einer Kalibrierung, einer Kühlung sowie aus einem Raupenzug zum Ziehen des erkaltenden Profils besteht, und wobei der Raupenzug aus übereinanderliegenden Endlos-Stollenketten gebildet ist, zwischen denen das Profil klemmend und ziehend förderbar ist, **dadurch gekennzeichnet. dass** die in der Stollenkette (8.1) und (8.2) quer zur Förderrichtung angeordneten Einzelstollen (9.1) und (9.2) nur mit einem Teilbereich ihrer Klemmfläche (10) an dem Profil (5) anliegen.

2. Vorrichtung nach Anspruch 1, **dadurch gekennzeichnet, dass** die Klemmfläche (10) des Stollens (9.1) bzw. (9.2) im wesentlichen in dem Bereich des gezogenen Profils (5) ausgespart ist, wo die Hohlkammer (11) des Profils (5) liegt.

3. Vorrichtung nach Anspruch 2, **dadurch gekennzeichnet, dass** die Klemmfläche (10) im wesentlichen eine rechteckige Aussparung (12) aufweist.

4. Vorrichtung nach Anspruch 3, **dadurch gekennzeichnet, dass** die Aussparungen (12) der Klemmflächen (10) von den übereinanderliegenden Einzelstollen (9.1) bzw. (9.2) gegenüberliegend angeordnet sind.

5. Vorrichtung nach einem oder mehreren der vorhergehenden Ansprüche 1 bis 4, **dadurch gekennzeichnet, dass** die jeweils übereinanderliegend angeordneten Einzelstollen (9.1) bzw. (9.2) der Profilform (5) angepasst sind.

6. Vorrichtung nach Anspruch 5, **dadurch gekennzeichnet. dass** die sich gegenüberliegenden Einzelstollen (9.1) bzw. (9.2) eine L-Form aufweisen, wobei in den langen Schenkelbereichen (13) jeweils die Aussparungen (12) angeordnet sind, die sich jeweils oberhalb und unterhalb auf den Bereich der Hauptkammer (11) des Profils (5) legen, und wobei sich die Stirnseiten (14) der kurzen Schenkel (15) auf die Blendrahmenbereiche (16) des Profils (5) legen und diese jeweils gegen die langen Schenkel (13) pressen.

## Claims

1. Device for extruding hollow plastic sections for casement or door sections, comprising, serially arranged, an extruder, a calibration means, a cooling means and a caterpillar take-off for drawing the section as it cools, wherein the caterpillar take-off is formed of endless cleat chains lying above one another, between which the section can be transported while being clamped and drawn, **characterised in that** the individual cleats (9.1) and (9.2) arranged in the cleat chain (8.1) and (8.2) perpendicular to the direction of conveying have only a portion of their clamping face (10) in contact with the section (5).

2. Device as claimed in Claim 1, **characterised in that** the clamping face (10) of the cleat (9.1) or (9.2) is substantially recessed in the region of the drawn section (5) in which the cavity (11) of the section (5) is located.

3. Device as claimed in Claim 2, **characterised in that** the clamping face (10) substantially has a rectangular recess (12).

4. Device as claimed in Claim 3, **characterised in that** the recesses (12) in the clamping faces (10) of the individual cleats (9.1) and (9.2) respectively lying above one another are positioned opposite each other.

5. Device as claimed in one or more of the preceding Claims 1 to 4, **characterised in that** the cleats (9.1) and (9.2) respectively lying above one another are adapted to the shape of the section (5).

6. Device as claimed in Claim 5, **characterised in that** the cleats (9.1) and (9.2) respectively positioned opposite each other are L-shaped, wherein the recesses (12) are located in each of the long leg regions (13), these recesses each coming to lie above and below on the region of the main cavity (11) of the section, and wherein the ends (14) of the short legs (15) come to lie on the edging regions (16) of the section (5) and these regions each press against the long legs (13).

## Revendications

1. Dispositif pour l'extrusion de profilés creux en matière plastique pour des profilés de fenêtres ou de portes, qui est constitué par un ensemble série formé d'une extrudeuse, d'une unité de calibrage, d'un dispositif de refroidissement ainsi que d'un système de traction à chenilles pour tirer le profilé refroidi, et dans lequel le dispositif de traction à chenilles est formé par des chenilles sans fin à patins, qui sont superposées et entre lesquelles le profilé peut être entraîné par tirage, à l'état serré, **caractérisé en ce que** les patins, individuels (9.1 et 9.2) qui sont disposés dans la chaîne à patins (8.1 et 8.2), transversalement par rapport à la direction d'entraînement, s'appliquent uniquement par une partie de leur surface de serrage (10) contre le profilé (5).

2. Dispositif selon la revendication 1, **caractérisé en ce que** la surface de serrage (10) du patin (9.1, 9.2) est supprimée essentiellement dans la zone du profil étiré (5), où est située la cavité (11) du profilé (5).

3. Dispositif selon la revendication 2, **caractérisé en ce que** la surface de serrage (10) possède essentiellement un évidement rectangulaire (12).

4. Dispositif selon la revendication 3, **caractérisé en ce que** les évidements (12) des surfaces de serrage (10) sont disposés en vis-à-vis des patins individuels superposés (9.1) ou (9.2).

5. Dispositif selon une ou plusieurs des revendications 1 à 4, **caractérisé en ce que** les patins (9.1) et (9.2), qui sont respectivement superposés, sont adaptés à la forme du profilé (5).

6. Dispositif selon la revendication 5, **caractérisé en ce que** les patins (9.1) et (9.2) qui sont disposés en vis-à-vis, possèdent une forme en L, les évidements respectifs (12), qui sont situés respectivement au-dessus et au-dessous dans la zone de la chambre principale (11) du profilé (5), étant disposés dans les parties (13) des branches longues, tandis que les faces frontales (14) des branches courtes (15) s'appliquent sur les parties (16) en forme de cadre fermé du profilé (5) et repoussent ces parties respectivement contre les longues branches (13).
